# EUROPÄISCHE PATENTSCHRIFT

(11) **EP 0 985 487 B1**
(45) Veröffentlichungstag und Bekanntmachung des Hinweises auf die Patenterteilung: **07.04.2004**
(21) Anmeldenummer: 99116152.2
(22) Anmeldetag: 19.08.1999
(51) Int. Cl.: B23Q 1/01, B23Q 39/04

(54) **Werkzeugmaschine**
Machine tool
Machine outil

(30) Priorität: 10.09.1998 DE 19841449
(43) Veröffentlichungstag der Anmeldung: 15.03.2000
(73) Patentinhaber: Index-Werke GmbH & Co. KG Hahn & Tessky, 73730 Esslingen (DE)
(72) Erfinder: Link, Helmut Friedrich, 73773 Aichwald 1 (Schanbach) (DE); Trautmann, Günther Heinrich, 73230 Kirchheim-Nabern (DE)
(74) Vertreter: Hoeger, Stellrecht & Partner

(56) Entgegenhaltungen:
- EP-A- 0 002 527
- EP-A- 0 726 119

## Beschreibung

Die Erfindung betrifft eine Werkzeugmaschine umfassend ein Maschinengestell mit einem Untergestell und einem auf diesem sitzenden und einen Tragring aufweisenden Maschinenständer, einen um eine im wesentlichen vertikale Achse drehbar am Tragring gelagerten Träger, mehrere an dem Träger angeordnete Werkstückaufnahmeeinrichtungen für zu bearbeitende Werkstücke, einen um die vertikale Achse herum verlaufenden Arbeitsraum, in welchem die Werkstückaufnahmeeinrichtungen durch Drehen des Träger um die vertikale Achse herum bewegbar sind, und eine Vielzahl von an dem Maschinengestell im Bereich des Arbeitsraums angeordneten Stationen, in welchen die Werkstückaufnahmeeinrichtungen während eines Bearbeitungszyklus positionierbar sind.

Derartige Werkzeugmaschinen sind aus dem Stand der Technik bekannt. Beispielsweise ist eine derartige Werkzeugmaschine in der deutschen Patentanmeldung 195 04 369.3-14 beschrieben.

Bei derartigen Werkzeugmaschinen besteht das Problem, daß der Träger mitsamt den Werkstückaufnahmeeinrichtungen eine sehr große Masse aufweist, die beim Durchlaufen der einzelnen Stationen einerseits beschleunigt und andererseits abgebremst wird, so daß das Maschinengestell, insbesondere der Maschinenständer desselben, hohe in Azimutalrichtung zur vertikalen Achse wirkende Kräfte aufnehmen muß.

Darüber hinaus besteht nicht nur das Problem, die beim Beschleunigen und Abbremsen des Trägers hohen, in Azimutalrichtung wirkenden Kräfte aufzunehmen, sondern auch in den einzelnen Stationen den Träger mitsamt den Werkstückaufnahmeeinrichtungen mit großer Präzision und großer Steifigkeit zu positionieren, um eine hohe Präzision bei der Bearbeitung der Werkstücke in den einzelnen Stationen zu erhalten.

Bei der bekannten Lösung ist vorgesehen, dem Maschinenständer durch in Radialebenen zur Achse verlaufende Rippen auszuführen, welche den Tragring tragen. Eine derartige Lösung ist mit der erforderlichen Steifigkeit nur mit hohem Aufwand realisierbar.

Aus diesem Grund liegt der Erfindung die Aufgabe zugrunde, eine Werkzeugmaschine der gattungsgemäßen Art derart zu verbessern, daß das Maschinengestell bei möglichst rationellem Aufbau eine möglichst große Steifigkeit aufweist.

Diese Aufgabe wird bei einer Werkzeugmaschine der eingangs beschriebenen Art erfindungsgemäß dadurch gelöst, daß der Maschinenständer einen den Tragring gegenüber dem Untergestell fixierenden Versteifungsmantel aufweist, welcher außerhalb des Arbeitsraum verläuft und diesen zumindest teilweise umschließt, daß der Versteifungsmantel in einer um die vertikale Achse herum verlaufenden Mantelfläche liegende und in dieser Mantelfläche wirkende, vom Tragring übertragene Kräfte verformungssteif aufnehmende Manteltragwerkselemente umfaßt, die miteinander zu einem verformungssteifen Mantelflächentragwerk verbunden sind.

Der Kern der erfindungsgemäßen Lösung ist somit darin zu sehen, dem Maschinenständer dadurch eine große Steifigkeit gegen alle möglichen, am Tragring auftretenden Kräfte dadurch zu verleihen, daß diese durch einen als Mantelflächentragwerk ausgebildeten Versteifungsmantel aufgenommen werden, welcher außerhalb des Arbeitsraums und diesen zumindest teilweise umschließend verläuft, so daß einerseits die in Azimutalrichtung zur vertikalen Achse wirkenden Kräfte in großem Abstand von der vertikalen Achse aufgefangen werden und sich in diesem großen radialen Abstand von der vertikalen Achse durch das Mantelflächentragwerk einfach in das Untergestell einleiten lassen.

Beim Vorsehen eines den Arbeitsraum umschließenden Versteifungsmantels wäre prinzipiell noch ein Zugang zu dem Arbeitsraum in vertikaler Richtung sowohl von oben als auch von unten möglich. Ein derartiger Zugang ist jedoch nicht zufriedenstellend.

Aus diesem Grund sieht ein besonders vorteilhaftes Ausführungsbeispiel vor, daß der Versteifungsmantel mehrere Durchbrüche aufweist, über welche der Arbeitsraum zugänglich ist.

Vorzugsweise ist dabei vorgesehen, daß der Arbeitsraum ausschließlich über die Durchbrüche im Versteifungsmantel zugänglich ist, so daß die Durchbrüche eine ausreichende Größe aufweisen müssen, um sämtliche im Arbeitsraum erforderlichen Manipulationen durchführen zu können, insbesondere um eine ausreichende Bestückung der einzelnen Stationen mit Werkzeugen durchführen zu können und auch in einer Beund/oder Entladestation das Werkstück aus dem Arbeitsraum heraus oder in diesen hinein bewegen zu können.

Besonders günstig ist es dabei, wenn jeder Station ein Durchbruch im Versteifungsmantel zugeordnet ist, so daß jede der Stationen einzeln zugänglich ist.

Ein besonders vorteilhaftes Ausführungsbeispiel einer erfindungsgemäßen Werkzeugmaschine sieht beispielsweise vor, daß die Stationen Bearbeitungsstationen umfassen und daß in jeder Bearbeitungsstation der in dieser vorgesehene Werkzeugträger über einen der Durchbrüche von außen zugänglich ist.

Dabei wäre es prinzipiell möglich, die Zugänglichkeit zu mehreren Stationen über einen Durchbruch vorzusehen.

Aus Gründen einer möglichst großen Stabilität des Versteifungsmantels ist jedoch vorteilhafterweise vorgesehen, daß jeder Bearbeitungsstation ein eigener Durchbruch zugeordnet ist, um die Zugänglichkeit zu dem Werkzeugträger zu schaffen.

Ergänzend hierzu sieht ein weiteres bevorzugtes Ausführungsbeispiel vor, daß die Stationen eine Beund/oder Entladestation umfassen und daß in der Be- und/oder Entladestation eine Werkstücktransporteinrichtung durch den Durchbruch hindurch verläuft. In diesem Fall ist der Durchbruch so zu dimensionieren, daß die gesamte Werkstücktransporteinrichtung während des Betriebs der Werkzeugmaschine durch den Durchbruch hindurchgreifen kann.

Insbesondere sieht ein besonders vorteilhaftes Ausführungsbeispiel vor, daß für eine Beladestation und eine neben dieser angeordneten Entladestation ein einziger vergrößerter Durchbruch vorgesehen ist, welcher ein Anordnen der entsprechenden Werkstücktransporteinrichtung erleichtert.

Vorzugsweise ist der Beladestation und der neben dieser liegenden Entladestation ein einziger Durchbruch zugeordnet, welcher sich beispielsweise über zwei Manteltragwerkselemente erstrecken könnte. Zweckmäßigerweise ist jedoch diesem einzigen Durchbruch auch ein einziges Manteltragwerkselement zugeordnet.

Hinsichtlich der Ausbildung der Manteltragwerkselemente wurden im Zusammenhang mit der bisherigen Erläuterung der einzelnen Ausführungsbeispiele keine näheren Angaben gemacht. So sieht ein vorteilhaftes Ausführungsbeispiel einer erfindungsgemäßen Werkzeugmaschine vor, daß jedes der Manteltragwerkselemente sich zumindest teilweise um einen der Durchbrüche herum erstreckt und somit in der Lage ist, in einfacher Weise die Kräfte um den Durchbruch herum zu führen und die erforderliche Verformungssteifigkeit zu zeigen.

Eine besonders günstige Lösung einer erfindungsgemäßen Werkzeugmaschine sieht vor, daß jedes Manteltragwerkselement sich flächenhaft parallel zu der Mantelfläche erstreckende zusammenhängende Flachstreben umfaßt.

Die Flachstreben könnten prinzipiell in Form einer Gitterstruktur oder Gittertragwerkstruktur ausgebildet sein. Eine konstruktiv besonders einfache Lösung sieht jedoch vor, daß die Flachstreben innerhalb ihrer Außenkontur geschlossene Flächen aufweisen, das heißt daß sie einfach herzustellende, sich mit ihren Flachseiten parallel zu dem Mantel erstreckende Flachmaterialteile sind, die jedoch durch ihre Erstreckung in Richtung der Mantelfläche gegenüber in der Mantelfläche wirkenden Kräfte steif ausgebildet sind.

Prinzipiell wäre es möglich, ein Manteltragwerkselement aus mehreren Flachstreben zusammenzusetzen, beispielsweise zusammenzuschrauben. Als konstruktiv besonders günstig und auch insbesondere hinsichtlich der Verformungssteifigkeit besonders günstig hat es sich jedoch erwiesen, wenn die Flachstreben jedes Manteltragwerkselements ein zusammenhängendes einstückiges Teil bilden, welches aufgrund seiner Einstückigkeit eine besonders hohe Verformungssteifigkeit aufweist.

Hinsichtlich der Art der Ausbildung der Mantelfläche wurden im Zusammenhang mit der bisherigen Erläuterung des erfindungsgemäßen Mantelflächentragwerks keine näheren Angaben gemacht. So sieht ein vorteilhaftes Ausführungsbeispiel vor, daß zumindest ein Abschnitt der Mantelfläche zumindest über einen Teilumfang des Versteifungsmantels ähnlich einem Bereich einer parallel zur Achse prismatischen Fläche ausgebildet ist, das heißt, daß sich die Fläche im wesentlichen parallel zur Achse erstreckt, wobei die Grundfläche einer derartigen prismatischen Fläche eine beliebige Form aufweisen kann. Beispielsweise wäre es möglich, als Grundfläche eine Kreisform oder eine Vieleckform oder zumindest teilweise eine Form eines regelmäßigen Vielecks zugrunde zu legen.

Alternativ oder ergänzend dazu sieht ein vorteilhaftes Ausführungsbeispiel vor, daß zumindest ein Abschnitt der Mantelfläche zumindest über einen Teilumfang des Versteifungsmantels ähnlich einem Bereich einer Kegelfläche mit einer parallel zur vertikalen Achse verlaufenden Kegelachse ausgebildet ist. Eine derartige Lösung hat den Vorteil, daß eine Kegelfläche eine besondere Stabilität nicht nur gegen in Azimutalrichtung wirkende Kräfte, sondern auch gegen quer zur Achse wirkende Kräfte gewährleistet. Die Kegelachse kann dabei vorzugsweise mit der vertikalen Achse der Werkzeugmaschine zusammenfallen.

Auch bei einer Kegelfläche sind die unterschiedlichsten Grundflächen denkbar. Beispielsweise sind als denkbare Grundflächen Kreisflächen, Vieleckflächen oder teilweise Grundflächen in Form eines regelmäßigen Vielecks realisierbar.

Eine besonders bevorzugte Lösung sieht dabei vor, daß die Mantelfläche eine vieleckige Grundfläche aufweist, die sich in von der Grundfläche weg verlaufenden Kanten in der Mantelfläche fortsetzt, so daß insgesamt die Mantelfläche durch sich zwischen den Kanten in Ebenen erstreckenden Mantelstücken gebildet ist, die sich einerseits mechanisch einfach realisieren lassen und insbesondere weitere Vorteile dahingehend bieten, daß sie nicht nur eine hohe Steifigkeit gegen in Azimutalrichtung wirkende Kräfte schaffen, sondern auch eine hohe Steifigkeit gegen quer zur Kegelachse wirkende Kräfte.

Eine besonders günstige Form sieht vor, daß ein Teil der Grundfläche der Mantelfläche die Form eines regelmäßigen Vielecks aufweist, da insbesondere ein regelmäßiges Vieleck sich günstig an eine Maschine anpassen läßt, in welcher in konstanten Winkelabständen voneinander angeordnete Stationen des Trägers vorgesehen sind.

Hinsichtlich der Zuordnung der Manteltragwerkselemente zu einem eine vieleckige Grundfläche aufweisenden Mantel wurden bislang keine näheren Angaben gemacht. So könnte beispielsweise ein Manteltragwerkselement sich über mehrere Kanten eines Vielecks erstrecken. Eine besonders günstige Anpassung der mehreren Manteltragwerkselemente an eine vieleckige Grundfläche der Mantelfläche sieht jedoch vor, daß sich jeweils ein Manteltragwerkselement zwischen zwei in Umfangsrichtung aufeinanderfolgenden Ecken der vieleckigen Grundfläche erstreckt, das heißt, daß jeweils ein Manteltragwerkselement eine Seitenkante der vieleckigen Grundfläche bildet. Eine derartige Konstruktion läßt sich besonders günstig mit der gewünschten Verformungssteifigkeit auslegen.

Im Zusammenhang mit der bisherigen Erläuterung der einzelnen Ausführungsbeispiele der erfindungsgemäßen Lösung wurde lediglich davon ausgegangen, daß der Maschinenständer ein Mantelflächentragwerk umfaßt, welches diesem die ausreichende Verformungssteifigkeit gewährleistet. Ein derartiger Maschinenständer ist in dieser Form realisierbar. Das Mantelflächentragwerk muß in diesem Fall jedoch dahingehend ausgelegt werden, daß es auch große in vertikaler Richtung, das heißt in Richtung der vertikalen Achse verlaufende Kräfte und auch große quer zur vertikalen Achse verlaufende Kräfte aufnimmt. Um diesbezüglich einen größeren Freiheitsgrad bei der Gestaltung des Mantelflächentragwerks zu erhalten und um den Maschinenständer hinsichtlich seiner Form optimal den wirkenden Kräften anzupassen, ist es besonders vorteilhaft, wenn der Tragring zusätzlich zum Mantelflächentragwerk gegenüber dem Untergestell durch Quertragwerkselemente fixiert gehalten ist, welche sich in parallel zur vertikalen Achse und quer zur Mantelfläche verlaufenden Querebenen erstrecken und in diesen Querebenen wirkende und von dem Tragring übertragende Kräfte verformungssteif aufnehmen. Diese Quertragwerkselemente eignen sich insbesondere dazu, in einfacher Weise in vertikaler Richtung und quer zur vertikalen Achse wirkende Kräfte aufzunehmen, so daß hierdurch eine zusätzliche Versteifung des Mantelflächentragwerks mit einfachen Mitteln möglich ist und somit auch das Mantelflächentragwerk von Kraftwirkungen zumindest teilweise entlastet werden kann, für welche dieses nur bedingt geeignet ist.

Besonders günstig ist es hierbei, wenn die Querebenen parallel zu radialen Richtungen zur vertikalen Achse verlaufen, um insbesondere in geeigneter Weise quer zu dieser vertikalen Achse wirkende Kräfte aufzunehmen.

Eine besonders hohe Stabilität der Quertragwerkselemente ist dann erreichbar, wenn diese sich flächenhaft parallel zu den Querebenen erstrecken.

Vorzugsweise könnten derartige Quertragwerkselemente in Gitter- oder Strebenbauweise aufgebaut sein.

Eine besonders günstige Realisierung der Quertragwerkselemente sieht vor, daß diese als geschlossene Wandelemente ausgebildet sind, da sich mit derartigen geschlossenen Wandelementen in einfacher Weise hohe Querkräfte übertragen lassen und derartige geschlossene Wandelemente dabei noch sehr einfach herstellbar sind.

Hinsichtlich der Verbindung der Quertragwerkselemente mit dem Mantelflächentragwerk sind die unterschiedlichsten Lösungen denkbar. So wäre es beispielsweise denkbar, die Quertragwerkselemente durch Schraubverbindungen oder ähnliche formschlüssige Verbindungen mit dem Mantelflächentragwerk zu verbinden. Eine besonders günstige Lösung sieht vor, daß die Quertragwerkselemente einstückig mit dem Mantelflächentragwerk verbunden sind.

Hinsichtlich der Anordnung der Quertragwerkselemente wurden im Zusammenhang mit der bisherigen Erläuterung der einzelnen Ausführungsbeispiele keine näheren Angaben gemacht.

So ist es prinzipiell möglich, die Quertragwerkselemente an beliebigen Stellen anzuordnen, so lange diese keine Einschränkung des Arbeitsraums bewirken und auch die Zugänglichkeit zu den Durchbrüchen nicht behindern. Besonders günstig ist es jedoch, wenn die Quertragwerkselemente in Azimutalrichtung zur vertikalen Achse jeweils zwischen zwei Stationen der Werkzeugmaschine angeordnet sind und dadurch keinerlei Einschränkung des zur Verfügung stehenden Arbeitsraums im Bereich der einzelnen Stationen bedingen.

Dabei ist es nicht zwingend erforderlich, wenn zwischen jeder Station ein derartiges Quertragwerkselement angeordnet ist. Es ist sogar vielfach günstig, zwischen zwei aufeinanderfolgenden Stationen kein derartiges Quertragwerkselement anzuordnen, sofern dieses eine Manipulation des Werkstücks in diesen beiden Stationen behindert.

Eine vorteilhafte Lösung sieht jedoch vor, daß zumindest mehrere Quertragwerkselemente vorgesehen sind und zweckmäßigerweise in konstanten Winkelabständen, beispielsweise nach jeweils zwei aufeinanderfolgenden Stationen, derartige Quertragwerkselemente vorgesehen sind.

Prinzipiell sind derartige Quertragwerkselemente dann wenig hinderlich, wenn diese zwischen aufeinanderfolgenden Bearbeitungsstationen angeordnet sind, da zwischen aufeinanderfolgenden Bearbeitungsstationen in der Regel keine zusätzliche Manipulation des Werkstücks erfolgt, welches durch Quertragwerkselemente gestört werden kann.

Hinsichtlich der Anordnung der Quertragwerkselemente wurden im Zusammenhang mit der bisherigen Erläuterung von Werkzeugmaschinen mit diesen keine näheren Angaben gemacht. Prinzipiell wäre es denkbar, die Quertragwerkselemente radial außenliegend an dem Mantelflächentragwerk vorzusehen. Allerdings würden derartige Quertragwerkselemente dann die Abmessungen der Werkzeugmaschine vergrößern, wenn man davon ausgeht, daß der Abstand des Mantelflächentragwerks von der vertikalen Achse durch die in dem Arbeitsraum vorzusehenden Elemente bedingt ist.

Eine besonders kompakte Lösung der erfindungsgemäßen Werkzeugmaschine ist daher dann realisierbar, wenn die Quertragwerkselemente innerhalb des Mantelflächentragwerks angeordnet sind, da in diesem Fall das Mantelflächentragwerk die maximalen Außenmaße des Maschinengestells bedingt.

Insbesondere läßt sich in diesem Fall das Vorsehen von Flächentragwerken dann vorteilhaft mit der Anordnung derselben zwischen einzelnen Stationen kombinieren, wenn derartige innerhalb des Mantelflächentragwerks angeordnete Quertragwerkselemente zwischen einzelnen Bearbeitungsstationen angeordnet sind, denn in diesem Fall können die Quertragwerkselemente gleichzeitig zumindest zum Teil zur räumlichen Abtrennung der einzelnen Bearbeitungsstationen voneinander dienen und dabei auch bereits zum Teil dazu dienen, einen Späneschutz zwischen einzelnen Bearbeitungsstationen zu bilden.

Hinsichtlich der Ausbildung des Mantelflächentragwerks wurde im Zusammenhang mit den bislang beschriebenen Ausführungsbeispielen lediglich davon ausgegangen, daß dieses durch Manteltragwerkselemente gebildet ist.

Eine zusätzliche Aussteifung des Mantelflächentragwerks, insbesondere dann, wenn dieses eine sich über einer vieleckigen Grundfläche erhebende Mantelfläche aufweist, sieht vor, daß das Mantelflächentragwerk mit sich zumindest teilweise in azimutaler Richtung erstreckenden Versteifungsstreben versehen ist, wobei derartige Versteifungsstreben noch zusätzlich zu den Manteltragwerkselementen vorgesehen sind und sich von den Manteltragwerkselementen in radialer Richtung abheben und dabei entweder auf einer der vertikalen Achse zugewandten Innenseite oder einer der vertikalen Achse abgewandten Außenseite angeordnet sind.

Eine besonders günstige Wirkung derartiger Versteifungsstreben ist dann erreichbar, wenn diese in einer quer zur vertikalen Achse verlaufenden Ebene liegen, da sich dann mit derartigen Versteifungsstreben eine verbesserte Verformungssteifigkeit des Mantelflächentragwerks gegen Dehnungen in radialer Richtung zur vertikalen Achse erreichen läßt.

Besonders günstig ist es dabei, wenn sich die Versteifungsstreben jeweils bis zu den Quertragwerkselementen erstrecken und mit diesen verbunden sind, so daß die Versteifungsstreben nicht nur das Mantelflächentragwerk stabilisieren, sondern gleichzeitig auch noch eine Versteifung der Quertragwerkselemente relativ zueinander bewirken.

Derartige Versteifungsstreben können prinzipiell zusätzlich, beispielsweise durch Formschlußelemente, mit dem Mantelflächentragwerk verbunden sein. Eine besonders günstige Lösung sieht jedoch vor, daß die Versteifungsstreben einstückig mit dem Mantelflächentragwerk verbunden sind und somit diesem eine maximale Stabilität gewährleisten.

Noch vorteilhafter ist es, wenn die Versteifungsstreben noch zusätzlich einstückig mit den Quertragwerkselementen verbunden sind und auch somit diesen eine optimale Versteifung relativ zueinander geben.

Hinsichtlich der Dimensionierung des Maschinenständers selbst wurden im Zusammenhang mit der bisherigen Erläuterung der einzelnen Ausführungsbeispiele keine näheren Angaben gemacht. So könnte beispielsweise der Maschinenständer beliebig dimensioniert sein, so lange dieser insgesamt eine ausreichende Verformungssteifigkeit gegenüber allen auftretenden Kräften gewährleistet.

Besonders vorteilhaft läßt sich jedoch das Verformungsverhalten des Maschinenständers, selbst bei größter Verformungssteifigkeit, gestalten, wenn der Maschinenständer so dimensioniert ist, daß er hinsichtlich seiner Steifigkeit eine mehrzählige Symmetrie zur vertikalen Achse aufweist, so daß insbesondere die in azimutaler Richtung auf den Tragring wirkenden Kräfte keine zur vertikalen Achse asymmetrische Verformung des Maschinenständers bedingen, sondern aufgrund der mehrzähligen Symmetrie eine zur vertikalen Achse symmetrische Verformung, welche insbesondere der Präzision der Positionierung der Werkstückaufnahmeeinrichtungen in den einzelnen Stationen nach einem Drehen des Trägers relativ zum Maschinengestell dienlich ist.

Bei der bisherigen Erläuterung der erfindungsgemäßen Werkzeugmaschine wurde nicht im einzelnen definiert, wie die Werkstückaufnahmeeinrichtungen ausgebildet sein sollen. So wäre es beispielsweise denkbar, die Werkstückaufnahmeeinrichtungen als Werkstückhalteeinrichtungen zu gestalten, mit welchem sich Werkstücke an dem Träger fixieren und dann in die einzelnen Stationen bewegen lassen.

Ein besonders vorteilhaftes Ausführungsbeispiel sieht jedoch vor, daß die Werkstückaufnahmeeinrichtungen in einer im wesentlichen vertikalen Richtung bewegbar sind. Mit derartigen in einer im wesentlichen vertikalen Richtung bewegbaren Werkstückaufnahmeeinrichtungen besteht die Möglichkeit, Werkstücke von Werkstücktransporteinrichtungen aufzunehmen oder auf Werkstücktransporteinrichtungen abzulegen. Dies bedeutet, daß nicht zwingend eine ausschließlich vertikale Bewegbarkeit der Werkstückaufnahmeeinrichtungen notwendig ist, sondern die Bewegungsrichtung der Werkstückaufnahmeeinrichtungen auch noch einen spitzen Winkel mit der Vertikalen einschließen kann.

Besonders vorteilhaft ist es jedoch, wenn die Werkstückaufnahmeeinrichtungen in vertikaler Richtung relativ zum Träger bewegbar sind.

Besonders günstig ist es dabei, wenn die Werkstückaufnahmeeinrichtungen in einer Richtung parallel zur vertikalen Achse bewegbar sind.

Hinsichtlich der Werkstückaufnahmeeinrichtungen selbst sieht eine besonders günstige Lösung vor, daß die Werkstückaufnahmeeinrichtungen als Werkstückspindeln ausgebildet sind, welche die Möglichkeit schaffen, nicht nur die Werkstücke zu halten und durch Bewegen des Trägers in die einzelnen Stationen zu bewegen, sondern auch die Werkstücke selbst zu drehen und somit in einfacher Weise in den einzelnen Stationen Drehbearbeitungen durchzuführen.

Vorzugsweise sind dabei die Spindelachsen der Werkstückspindeln so angeordnet, daß sie parallel zur Bewegungsrichtung der Werkstückaufnahmeeinrichtungen relativ zum Träger verlaufen.

Die Bewegungen der Werkstückaufnahmeeinrichtungen relativ zum Träger können grundsätzlich in beliebiger Art und Weise realisiert werden. Besonders günstig ist es, wenn die Bewegung der Werkstückaufnahmeeinrichtungen relativ zum Träger als numerisch gesteuerte Achsbewegung erfolgt.

Aus Gründen einer möglichst hohen Präzision der Positionierung der Werkstückaufnahmeeinrichtungen relativ zum Maschinengestell hat es sich als besonders günstig erwiesen, wenn die Werkstückaufnahmeeinrichtungen relativ zum Träger linear ausschließlich in einer Richtung bewegbar sind, was allerdings eine Rotation der Werkstückaufnahmeeinrichtungen, beispielsweise um eine Spindelachse oder um eine mehrzählige Positionierungsachse, nicht ausschließt.

Hinsichtlich der Anordnung von Werkzeugen zur Bearbeitung der Werkstücke wurden bislang keine näheren Angaben gemacht. So ist vorzugsweise vorgesehen, daß zumindest ein Teil der Stationen als Bearbeitungsstation mit mindestens einem Werkzeug ausgebildet ist.

Vorzugsweise ist dabei dieses Werkzeug entweder stationär angeordnet oder in mindestens einer Richtung quer zur vertikalen Achse bewegbar, um die Bearbeitungsmöglichkeiten zu verbessern.

Die Werkzeugträger sind prinzipiell nicht mit dem Träger mitdrehbar am Maschinengestell angeordnet, sondern hinsichtlich der Drehung des Trägers drehfest mit dem Maschinengestell verbunden. Dabei wäre es beispielsweise denkbar, die Werkzeugträger der Bearbeitungsstationen am Maschinenständer zu fixieren.

Um jedoch den Maschinenständer von zusätzlichen Belastungen durch an diesem angeordnete Werkzeugträger freizuhalten, ist vorzugsweise vorgesehen, daß die Werkzeugträger für die Werkzeuge an dem Untergestell angeordnet sind.

Vorzugsweise ist dabei vorgesehen, daß das Untergestell die Werkzeugträger trägt.

Im einfachsten Fall ist vorgesehen, daß das Untergestell mit Trägerpulten für die Werkzeugträger versehen ist.

Die Werkzeugträger können prinzipiell in unterschiedlichster Art und Weise ausgebildet sein. Eine vorteilhafte Art der Ausbildung eines Werkzeugträgers sieht vor, daß dieser als Werkzeugschlitten ausgebildet ist, welcher eine einfache Positionierung des Werkzeugs relativ zu der jeweiligen Bearbeitungsstation, in welcher das Werkzeug zur Bearbeitung zur Verfügung steht, erlaubt.

Vorzugsweise sind die Schlitten dabei mit zumindest einer numerisch gesteuerten Achse, insbesondere einer Linearachse, versehen.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:

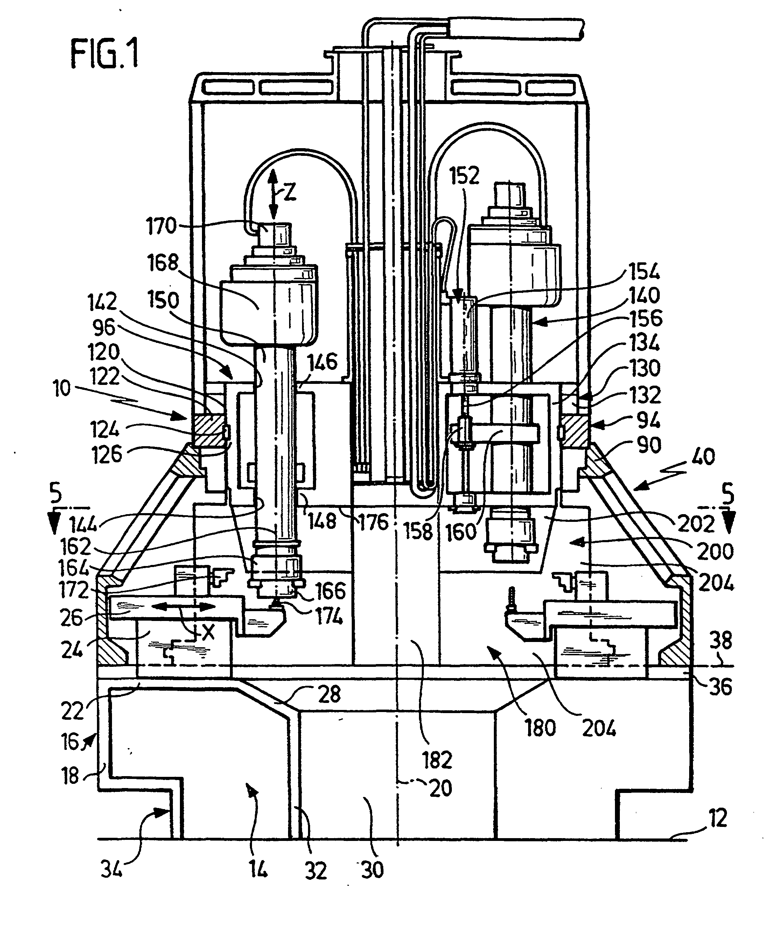

- Fig. 1: einen vertikalen Schnitt durch eine erfindungsgemäße Werkzeugmaschine;
- Fig. 2: einen Schnitt längs Linie 2-2 in Fig. 3 durch einen Maschinenständer der erfindungsgemäßen Werkzeugmaschine;
- Fig. 3: eine Draufsicht von oben auf einen Maschinenständer der erfindungsgemäßen Werkzeugmaschine;
- Fig. 4: eine Seitenansicht in Richtung des Pfeils A in Fig. 3;
- Fig. 5: einen Schnitt längs Linie 5-5 in Fig. 1 und
- Fig. 6: einen Schnitt ähnlich Fig. 5 durch eine Variante des dargestellten Ausführungsbeispiels.

Ein Ausführungsbeispiel einer erfindungsgemäßen Werkzeugmaschine, insbesondere einer Mehrspindelwerkzeugmaschine, umfaßt ein als Ganzes mit 10 bezeichnetes Maschinengestell, welches ein auf einer Grundfläche 12 stehendes Untergestell 14 aufweist.

Das Untergestell 14 umfaßt einerseits einen äußeren Ringkörper 16 mit einer Wand 18, welche zylindrisch zu einer mittig des Untergestells 14 angeordneten Achse 20 verläuft, die ungefähr senkrecht auf der Grundfläche 12 steht und diese durchstößt.

Von der Wand 18 des Ringkörpers 16 verlaufen vorzugsweise in radialer Richtung zur mittigen Achse 20 hin Trägerpulte 22, auf denen Schlittenführungen 24 mit auf diesen angeordneten Werkzeugschlitten 26 angeordnet sind. Die Trägerpulte 22 erstrecken sich bis zu einer Späneablaufwand 28, welche konisch zur mittigen Achse 20 hin abfällt und auf diese fallende Späne zu einem um die Achse 20 herumverlaufenden Spänesumpf 30 führt, der durch eine innere Wand 32 des Untergestells 14 begrenzt ist.

Ferner weist das Untergestell 14 vorzugsweise noch ein gegenüber der Wand 18 radial nach innen in Richtung der Achse 20 zurückgesetztes Fußteil 34 auf, mit welchem dieses auf der Grundfläche 12 aufsteht.

Das Untergestell 14 weist außerdem noch einen von dem Ringkörper 16 getragenen Auflagering 36 für einen als Ganzes mit 40 bezeichneten Maschinenständer auf, welcher auf diesem Auflagering 36 aufsitzt und durch eine vorzugsweise senkrecht zur Achse 20 verlaufende Trennebene 38 von dem Untergestell 14 abtrennbar ist.

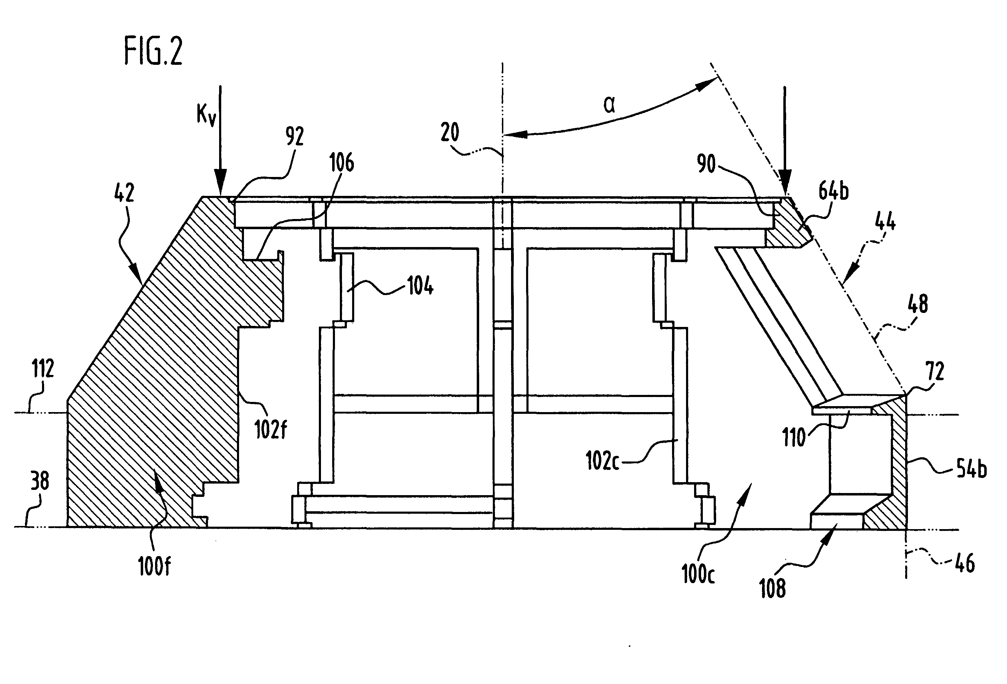

Der Maschinenständer 40 umfaßt, wie in den Fig. 2, 3 und 4 dargestellt, einen Versteifungsmantel, welcher in einer um die Achse 20 herum verlaufenden Mantelfläche 44, die einerseits aus einem zur Achse 20 prismatisch verlaufenden Mantelabschnitt 46 und andererseits einen zur Achse 20 mit einem Konuswinkel α verlaufenden konischen Mantelabschnitt 48 gebildet ist, liegende einzelne Manteltragwerkselemente 50a bis 50g aufweist, welche miteinander zu einem als Ganzes mit 52 bezeichneten Mantelflächentragwerk verbunden sind.

Die einzelnen Manteltragwerkselemente 50a bis 50f sind untereinander identisch ausgebildet und umfassen einen unteren Wandabschnitt 54a, welcher im Bereich des prismatischen Mantelabschnitts 46 liegt und sich ungefähr parallel zur Achse 20 erstreckt und einen oberen Rahmenabschnitt 56a, welcher einen Durchbruch 58a mit zwei seitlichen und beiderseits des Durchbruchs 58a liegenden Flachstreben 60a und 62a und einer oberen quer zu diesen verlaufenden und den Durchbruch 58a auf seiner Oberseite begrenzenden Flachstrebe 64a umschließt, wobei die seitlichen Flachstreben 60a und 62a an den Wandabschnitt 54a anschließen, welcher den Durchbruch 58a auf seiner Unterseite begrenzt. Alle Flachstreben 60a, 62a und 64a sowie der Wandabschnitt 54a sind darüber hinaus einstückig miteinander verbunden und erstrecken sich seitlich des Durchbruchs 58a bis zu Kanten 66a und 68a der Mantelfläche 44.

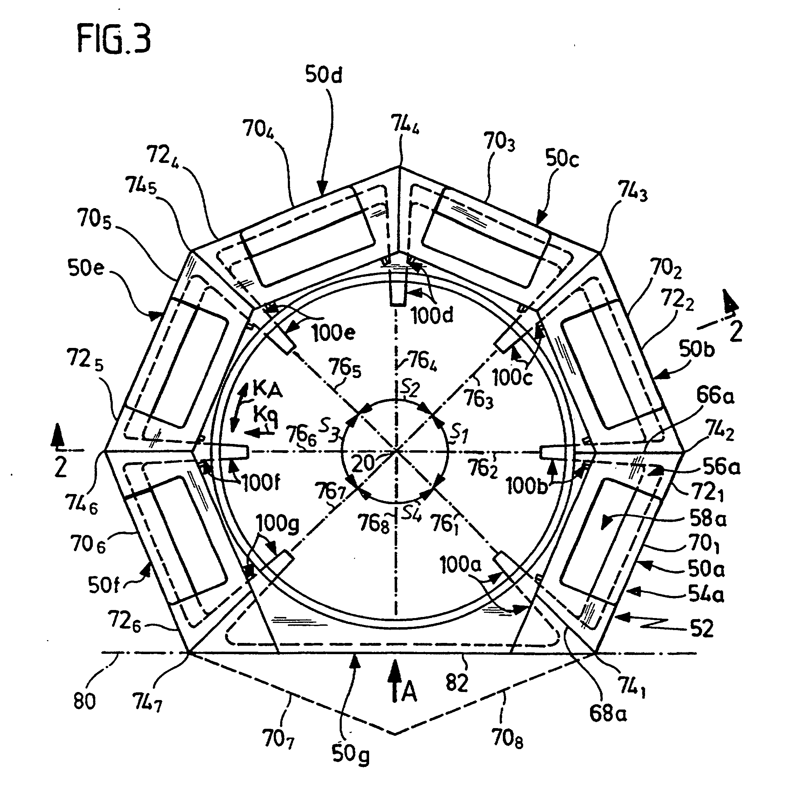

Vorzugsweise ist die Mantelfläche 44 so ausgebildet, daß sie im Bereich ihres prismatischen Mantelabschnitts 46, insoweit als die Manteltragwerkselemente 50a bis 50f betroffen sind, von einer Grundfläche eines regelmäßigen Vielecks, beispielsweise wie in Fig. 3 dargestellt, eine Grundfläche eines regelmäßigen Achtecks mit den Seitenkanten 70₁ bis 70₈ aufweist, so daß der prismatische Mantelabschnitt 46 sich ausgehend von dem regelmäßigen Achteck mit den Seitenkanten 70₁ bis 70₆ erhebt, wobei bei der erfindungsgemäßen Mantelfläche 44 die Seitenkanten 70₇ und 70₈, wie später noch im einzelnen erläutert, fehlen, jedoch die Seitenkanten 70₁ bis 70₆ die Grundfläche im Bereich der Manteltragwerkselemente 50a bis 50f bilden.

Somit ist im Bereich des prismatischen Mantelabschnitts 46 ausgehend von den Seitenkanten 70₁ bis 70₆ des regelmäßigen Achtecks die Mantelfläche 44 durch einerseits sich parallel zur Achse 20 andererseits sich parallel zu den Seitenkanten 70₁ bis 70₆ erstreckende ebene Flächen gebildet, zu denen die Wandabschnitte 54 der einzelnen Flächentragwerkselemente 50 parallel ausgerichtet sind.

Ferner findet zur Bildung der Mantelfläche 44 die Grundfläche des regelmäßigen Achtecks mit den Seitenkanten 70₁ bis 70₆ ihre Fortsetzung in dem konischen Mantelabschnitt 48, so daß die Mantelfläche 44 im Bereich der Manteltragwerkselemente 50a bis 50f ebene Flächen aufweist, die einerseits jeweils im Winkel α zur Achse 20 und andererseits parallel zu den Seitenkanten 70₁ bis 70₆ des regelmäßigen Achtecks verlaufen und an die Flächen des prismatischen Mantelabschnitts 46 unter Bildung einer azimutal um die Achse 20 umlaufenden Kante 72₁ bis 72₆ anschließen.

Darüber hinaus bildet die Mantelfläche 44 ausgehend von Eckpunkten 74₁ bis 74₇ der Seitenkanten 70₁ bis 70₆ des regelmäßigen Achtecks in Radialebenen 76₁ bis 76₇ zu der Achse 20, die zu den Eckpunkten 74₁ bis 74₇ verlaufen, verlaufende Kanten 78₁ bis 78₇, die zunächst im Bereich des prismatischen Mantelabschnitts 46 parallel zur Achse 20 und dann im Bereich des konischen Mantelabschnitts 48 unter dem Winkel α zur Achse 20 verlaufen.

Mit jeweils zwei aufeinanderfolgenden derartigen Kanten 78₁ bis 78₇ fallen dann die Seitenkanten 66a und 68a jedes der Manteltragwerkselemente 50a bis f zusammen.

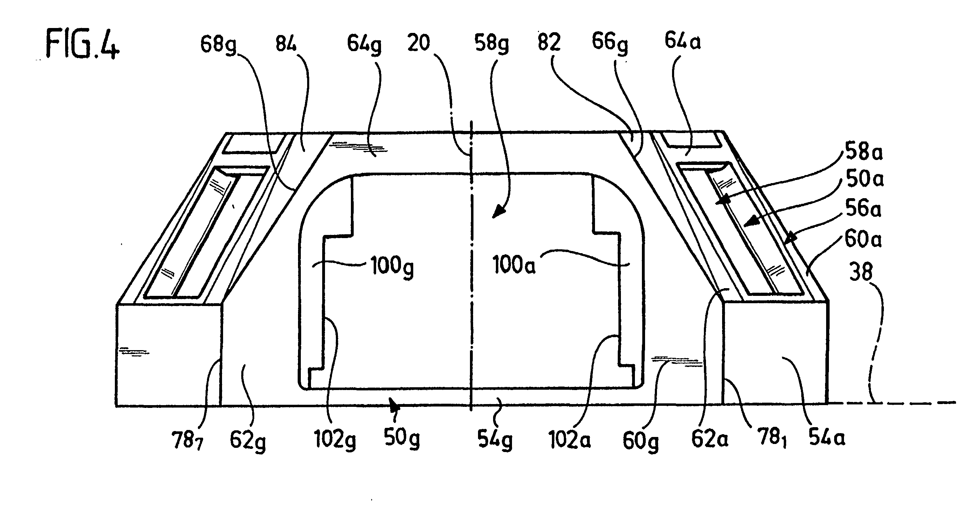

Im Gegensatz zu den Manteltragwerkselementen 50a bis 50f ersetzt das Manteltragwerkselement 50g, insbesondere dargestellt in Fig. 4, zwei Abschnitte des regelmäßigen Achtecks, welche den Seitenkanten 70₇ und 70₈ des regelmäßigen Achtecks entsprechen würden.

Die Mantelfläche 44 weist daher im Bereich des Manteltragwerkselements 50g eine in einer zur Achse 20 parallelen und durch die Eckpunkte 74₇ und 74₁ hindurchverlaufenden Ebene 80 liegende Fläche 82 auf, in welcher der Durchbruch 58g liegt und den Durchbruch 58g umgebende Flachstreben 54g, 60g und 62g sowie 64g, wobei die Flachstrebe 54g die untere, den Durchbruch 58g begrenzende Flachstrebe bildet, die Flachstreben 60g und 62g die seitlichen Flachstreben bilden, welche den Durchbruch 58g seitlich begrenzen, und die Flachstrebe 64g die obere Flachstrebe bildet, welche den Durchbruch 58g auf einer Oberseite begrenzt.

Im Gegensatz zu den Manteltragwerkselementen 50a bis 50f ist die Erstreckung der unteren Flachstrebe 54g in Richtung der Achse 20 weitaus geringer als die Erstreckung des Wandabschnitts 54a bis 54f der jeweiligen Manteltragwerkselemente 50a bis 50f, so daß der Durchbruch 58g sich beim Manteltragwerkselement 50g näher an die Trennebene 38 heranstreckt als die Durchbrüche 58a bis 58f.

Ferner ist die obere Flachstrebe 64g des Manteltragwerkselements 50g so ausgebildet, daß sie in Richtung der Achse 20 ungefähr dieselbe Erstreckung aufweist, wie die oberen Flachstreben 64a bis 64f der Manteltragwerkselemente 50a bis 50f.

Die seitlichen Flachstreben 62g und 60g erstrecken sich mit ihren Seitenkanten 66g und 68g bis zu den parallel zur Achse 20 verlaufenden Abschnitten der Kanten 78₇und 78₁, verlaufen jedoch ausgehend von der umlaufenden Kante 72₆und 72₁ in zunehmendem Abstand von den im Winkel α zur Achse 20 verlaufenden Abschnitten der Kanten 78₇ und 78₁, so daß zwischen diesen ein dreieckiges Wandstück 82, 84 des Manteltragwerkselements 50g liegt, welches den Anschluß an die Manteltragwerkselemente 50f und 50a in diesem Bereich bildet.

Alle Manteltragwerkselemente 50a bis 50g erstrecken sich von der Trennebene 38 bis zu einem in Fig. 2 erkennbaren und einstückig an die oberen Flachstreben 64 angeformten Tragring 90, welcher eine ringförmig um die Achse 20 umlaufende Aufnahme 92 für einen Lagerring 94 eines noch später im einzelnen beschriebenen Trägers 96.

Zur zusätzlichen Versteifung des von sämtlichen Manteltragwerkselementen 50a bis 50g gebildeten Mantelflächentragwerks 52 sind innerhalb desselben angeordnete Quertragwerkselemente 100a bis 100g vorgesehen, welche sich quer zu der Mantelfläche 44 erstrecken und vorzugsweise parallel und symmetrisch zu den Radialebenen 76₁ bis 76₇ angeordnet sind, die jeweils durch die Eckpunkte 74₁ bis 74₇ hindurchverlaufen.

Die Quertragwerkselemente 100a bis 100g sind vorzugsweise als einstückig an das Mantelflächentragwerk 52 angeformte und sich parallel zu den Radialebenen 76₁bis 76₇ radial nach innen in Richtung der Achse erstreckende Wände oder Rippen ausgebildet, die von der Trennebene 38 ausgehend in Richtung der Achse 20 bis zum Tragring 90 verlaufen und sich ausgehend von dem Mantelflächentragwerk 52 radial soweit nach innen erstrecken, daß Innenkanten 102 derselben ungefähr einen radialen Abstand von der Achse 20 aufweisen, welcher ungefähr dem Durchmesser der Aufnahme 92 entspricht. Die Innenkanten 102 verlaufen dabei vorzugsweise ungefähr parallel zur Achse 20 bis zu über die Innenkanten 102 radial nach innen vorstehenden Vorsprüngen 104 der Quertragwerkselemente 100, welche Aufnahmen 106 für Leitungskanäle bilden.

Darüber hinaus ist das Mantelflächentragwerk 52 noch nahe der Trennebene 38 mit einem umlaufenden, auf einer Innenseite der Manteltragwerkselemente 50a bis 50g einstückig an diese angeformten Ring aus Versteifungsstreben 108 versehen, welche sich jeweils auf einer Innenseite der Wandabschnitte 54 in Form eines radial nach innen vorspringenden Wulstes von Quertragwerkselement 100 zu Quertragwerkselement 100 erstrecken und einen geschlossen um die Achse 20 umlaufenden Ring bilden, der einerseits den Seitenkanten 70₁ bis 70₆ des Achtecks und andererseits zwischen den Eckpunkten 74₇ und 74₁ der Ebene 80 folgt.

Ferner sind noch zusätzliche parallel zu den Versteifungsstreben 108 verlaufende Versteifungsstreben 110 im Bereich der Manteltragwerkselemente 50a bis 50f vorgesehen, welche jeweils in Höhe einer Unterkante der Durchbrüche 58a bis 58f um die Achse 20 herum verlaufen, und jeweils an die seitlichen Flachstreben 60g und 62g anschließen.

Auch diese Versteifungsstreben 110 erstrecken sich vorzugsweise parallel zu einer Ebene 112, welche ungefähr parallel zur Trennebene 38 verläuft und senkrecht zur Achse 20 in gleicher Weise wie die Trennebene 38.

Der aus dem Mantelflächentragwerk 52 und den Quertragwerkselementen 100 gebildete Maschinenständer 40 ist nun in der Lage, sowohl parallel zur Achse 20 auf die Aufnahme 92 einwirkende, im wesentlichen vertikal verlaufende Kräfte Kᵥ als auch quer zur Achse 20 gerichtete Querkräfte K_{q} auf das Untergestell 14 zu übertragen, wobei die Übertragung der Kräfte sowohl über das Mantelflächentragwerk 52 als auch über die Quertragwerkselemente 100 erfolgt, und auch in Azimutalrichtung zur Achse 20 gerichtete Kräfte K_{A}, welche auf die Aufnahme 92 wirken, wobei die Übertragung dieser Kräfte K_{A} auf das Untergestell 14 im wesentlichen durch das Mantelflächentragwerk 52 erfolgt.

Der gesamte Maschinenständer 40 ist dabei ein gegenüber den gegebenenfalls variierenden Kräften K_{V}, K_{q} und K_{A} verformungssteifes Gebilde.

Um insbesondere eine symmetrische Verformungssteifigkeit bezüglich der Achse 20 zu gewährleisten, sind die Manteltragwerkselemente 50a bis 50g in Verbindung mit dem Quertragwerkselementen 100a bis 100g so dimensioniert, daß sie hinsichtlich ihrer Steifigkeit bezüglich der Kräfte K_{A}, K_{q} und K_{V} einen Körper mit mehrzähliger Symmetrie bezüglich der Achse 20 bilden.

Beispielsweise ist im Fall des vorliegenden Ausführungsbeispiels die Dimensionierung der Manteltragwerkselemente 50a bis 50f mit den entsprechenden Quertragwerkselementen 100a bis 100g so gewählt, daß die Manteltragwerkselemente 50a und 50b mit den Quertragwerkselementen 100a bis 100c einen Sektor S₁ bilden, welcher dieselbe Steifigkeit aufweist, wie ein Sektor S₂ gebildet aus den Manteltragwerkselementen 50c und 50d mit den Quertragwerkselementen 100c bis 100e und ebenfalls dieselbe Steifigkeit aufweisen wie ein Sektor S₃ gebildet aus den Manteltragwerkselementen 50e und 50f mit den Quertragwerkselementen 100e bis 100g und außerdem dieselbe Steifigkeit aufweisen wie ein Sektor S₄ gebildet aus dem Manteltragwerkselement 50g mit den Quertragwerkselementen 100g und 100a, so daß insgesamt der Maschinenständer 40 einen Körper bildet, der hinsichtlich seiner Steifigkeit aus vier Sektoren S₁ bis S₄ mit identischer Steifigkeit gebildet ist, und folglich eine vierzählige Symmetrie zur Achse 20 vorliegt, obwohl im Bereich des Manteltragwerkselement 50g die Grundfläche von der eines regelmäßigen Achtecks abweicht.

Der Träger 96 ist vorzugsweise als Spindeltrommel ausgebildet, welche mittels des Drehlagers 94 im Bereich ihres Außenumfangs 120 drehbar gegenüber dem Tragring 90 gelagert ist. Hierzu weist das Drehlager 94 einen fest mit dem Tragring 90 verbundenen Lageraußenring 122 auf, an welchem mittels Lagerkörpern 124 ein drehfest mit dem Träger 96 verbundener Lagerinnenring gelagert ist, so daß der gesamte Träger 96 um die Achse 20 als Drehachse drehbar gelagert ist.

Zum Drehen des Trägers 96 um die Achse 20 ist ein als Ganzes mit 130 bezeichneter Drehantrieb vorgesehen, welcher beispielsweise einen Stator 132 umfaßt, welcher fest mit dem Lageraußenring 122 verbunden ist und somit ebenfalls fest am Tragring 90 fixiert ist, während der Träger 96 fest mit einem Rotor 134 verbunden ist.

Beispielsweise ist der Drehantrieb 130 aus einem längs eines Kreisbogens um die Achse 20 gebogenen Linearantrieb, umfassend den Stator 132 und den Rotor 134 ausgebildet, der die Möglichkeit eröffnet, hohe Antriebsleistungen beim Drehen des Trägers 96 einzusetzen.

Zum Festlegen des Trägers 96 in den einzelnen Drehstellungen relativ zum Maschinenständer 40 des Maschinengestells 10 ist eine zeichnerisch nicht im einzelnen dargestellte Hirtverzahnung vorgesehen, welche ein präzises Fixieren des Trägers 96 in den einzelnen Drehstellungen relativ zum Maschinengestell 10 ermöglicht. Beispielsweise ist die Hirtverzahnung im Bereich des Drehlagers 94 vorgesehen.

Der als Spindeltrommel ausgebildete Träger 96 trägt mehrere, in konstanten radialen Abständen um die Achse 20 und in konstanten Winkelabschnitten relativ zueinander angeordnete Werkstückaufnahmeeinrichtungen 140, welche in diesem Fall als Werkstückspindeln ausgebildet sind, die Durchbrüche 142 und 144 in Trägerflanschen 146 und 148 des Trägers 96 parallel zur Achse durchsetzende und in Z-Richtung verschiebbar gelagerte Pinolen 150 aufweisen, welche durch einen fest am Träger 96 angeordneten Z-Achsenantrieb 152 in der Richtung der Z-Achse verschiebbar sind, wobei der Z-Achsenantrieb 152 einen am Träger 96 angeordneten Antriebsmotor 154 und eine am Träger 96 angeordnete Gewindespindel 156 aufweist, deren Spindelmutter 158 in einem mit der Pinole 150 verbundenen Haltearm 160 gelagert ist, so daß durch Verschiebung der Spindelmutter 158 über den Haltearm eine Verschiebung der gesamten Pinole 150 in Richtung der Z-Achse relativ zum Träger 96 erfolgt.

An den Pinolen 150 sind um eine Spindelachse 162 drehbar Werkstückspanneinrichtungen 164, insbesondere Spannfutter für Werkstücke 166 gelagert, welche ihrerseits in der Lage sind, auf ihrer dem Untergestell 14 zugewandten Seite die Werkstücke 166 aufzunehmen und zu spannen.

Ein Antrieb der Werkstückspanneinrichtungen 164 erfolgt über auf vorzugsweise den Werkstückspanneinrichtungen 164 gegenüberliegenden Seiten der Pinolen 150 an diesen angeordneten Spindelantrieben 168 und eine Betätigung der Werkstückspanneinrichtungen 164 mittels ebenfalls auf den Werkstückspanneinrichtungen 164 gegenüberliegenden Seiten der Pinolen 150 an diesen angeordneten Spannzylindern 170.

Durch Bewegen der Pinolen 150 in Richtung der Z-Achse sind somit auch die Werkstücke 166 in Richtung der Z-Achse und damit in Richtung auf das Untergestell 14 zu und von diesem weg bewegbar, so daß eine Bearbeitung der Werkstücke 166 mittels an den Werkzeugschlitten 26 angeordneten Werkzeugen 172 und 174 möglich ist, die durch ein numerisch gesteuertes Bewegen der Werkzeugschlitten 26 in einer zur Spindelachse 162 radialen X-Richtung und somit vorzugsweise in einer zur Achse 20 senkrecht verlaufenden Ebene relativ zum in der Werkstückspanneinrichtung 164 gehaltenen und um die Spindelachse 162 rotierenden Werkstück 166 erfolgt, das seinerseits durch Bewegen des Pinolen 150 in Z-Richtung numerisch gesteuert bewegbar ist.

Die Bearbeitung der Werkstücke 166 erfolgt dabei in einem Arbeitsraum, welcher zwischen der Ebene 38 und einer Stirnseite 176 des Trägers 96 liegt und sich azimutal um die Achse 20 herum erstreckt, und zwar vorzugsweise innerhalb des Mantelflächentragwerks 152 und außerdem noch innerhalb der Innenkanten 102 der Wände 100, wobei der Arbeitsraum 180 sich außerdem noch zwischen den Wänden 100 bis zum Mantelflächentragwerk 152 in radialer Richtung zur Achse 20 erstrecken kann.

Außerdem erfolgt eine innere Begrenzung des Arbeitsraums 180 durch eine sich zylindrisch um die Achse 20 erstreckende Zylinderwand 182, welche dazu dient, einen Späneflug quer zur, Achse 20 zu verhindern.

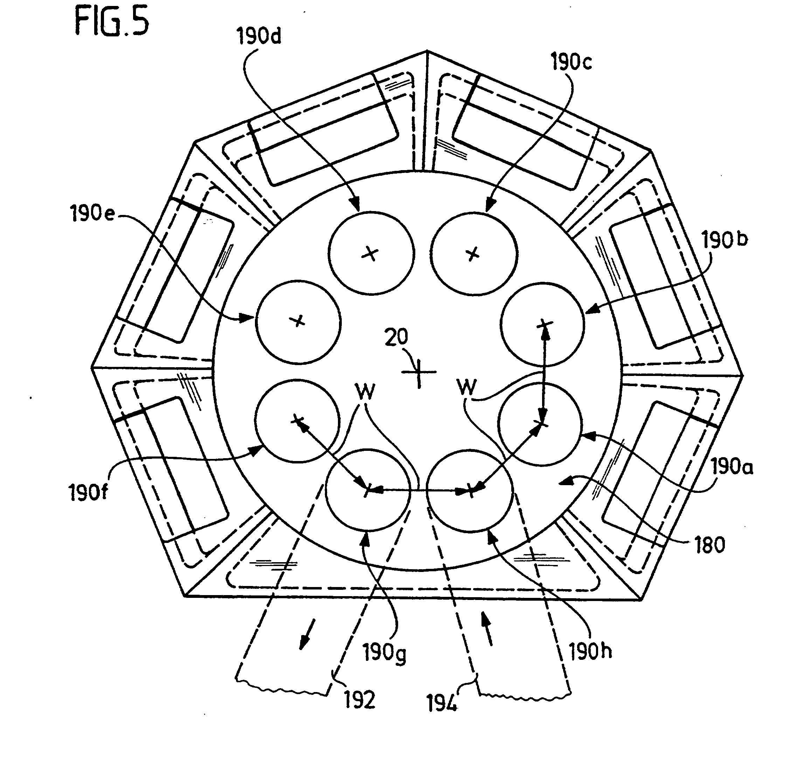

Zum Bearbeiten der Werkstücke 166 ist in dem Arbeitsraum 180, wie in Fig. 5 dargestellt, eine Vielzahl von einzelnen Spindelpositionen 190a bis 190h vorgesehen, wobei die Spindelpositionen 190a bis 190f jeweils symmetrisch zu einer Winkelhalbierenden zwischen jeweils aufeinanderfolgenden Radialebenen 76_{1 und 2}, 76_{2 und 3}, 76_{3 und 4}, 76_{4 und 5} und 76_{6 und 7} liegen, so daß die einzelnen Spindelstationen 190a bis f einen konstanten Winkelabstand W voneinander aufweisen.

Auch die weiteren Spindelstationen 190g und 190h weisen einerseits zueinander und andererseits zu der jeweils vorausgehenden und jeweils nachfolgenden Spindelstation denselben Winkelabstand W auf, so daß insgesamt alle Spindelstationen 190a bis 190h im selben Winkelabstand voneinander angeordnet sind und somit durch Drehen des Trägers 96 um den Winkelabstand W ein Werkstück 166 durch sämtliche Spindelstationen 190a bis 190h hindurchbewegt werden kann.

Beispielsweise sind bei der erfindungsgemäßen Werkzeugmaschine die Spindelstationen 190a bis 190f als Bearbeitungsstationen ausgebildet und somit ist jeder Spindelstation zumindest ein Werkzeug 172 oder 174 und vorzugsweise auch ein Werkzeugschlitten 26 zum Bewegen des Werkzeugs in X-Richtung zugeordnet. Die Spindelstation 190g und 190h dienen zum Entladen und Beladen von Werkstücken. Beispielsweise ist die Spindelstation 190g als Entladestation ausgebildet und mit einer Werkstückabfuhreinrichtung 192 versehen, welche in der Lage ist, aus der in der Spindelstation 190g stehenden Werkstückspanneinrichtung 164 ein fertig bearbeitetes Werkstück 166 zu entnehmen und abzutransportieren. In diesem Fall ist ferner vorzugsweise die Spindelstation 190h als Beladestation ausgebildet und mit einer Werkstückzuführeinrichtung 194 versehen, welche unbearbeitete Werkstücke 166 in die Spindelstation 190h transportiert und dort so positioniert, daß eine in dieser stehende Werkstückspanneinrichtung 164 durch Bewegen der dieser zugeordneten Pinole 150 in Z-Richtung auf das Werkstück zu in der Lage ist, das Werkstück aufzunehmen und zu spannen, so daß anschließend das Werkstück 166 durch die einzelnen Bearbeitungsstationen 190a bis 190f hindurchtransportiert und bearbeitet werden kann.

In den einzelnen Bearbeitungsstationen 190a bis 190f dienen die jeweils in diesen in den Manteltragwerkselementen 50a bis 50f vorgesehenen Durchbrüche 58a bis 58f dazu, einen Zugang zu den in diesen Stationen angeordneten Werkzeugen 172 und/oder 174 sowie den Werkzeugschlitten 26 zu ermöglichen und gegebenenfalls auch zu den in diesen Bearbeitungsstationen stehenden Werkstücken 166. Aus diesem Grund liegen die Durchbrüche 58a bis f jeweils so, daß zumindest ein Zugang zu den auf dem Werkzeugschlitten 26 sitzenden Werkzeugen 172 und 174 möglich ist, wobei der Werkzeugschlitten 26 in einer Höhe über der Trennebene 38 so angeordnet ist, daß er im Bereich der jeweiligen Wandabschnitte 54a bis 54f steht.

Der vergrößerte Durchbruch 58g im Bereich des Manteltragwerkselements 50g dient dazu, eine Montage der Werkstückzufuhreinrichtung 192 und der Werkstückabführeinrichtung 194 zu ermöglichen und ausreichend Raum für die Montage derselben zu schaffen, die sich dann jeweils bis zur entsprechenden Spindelstation 190g und 190h in Richtung der Achse 20 erstrecken.

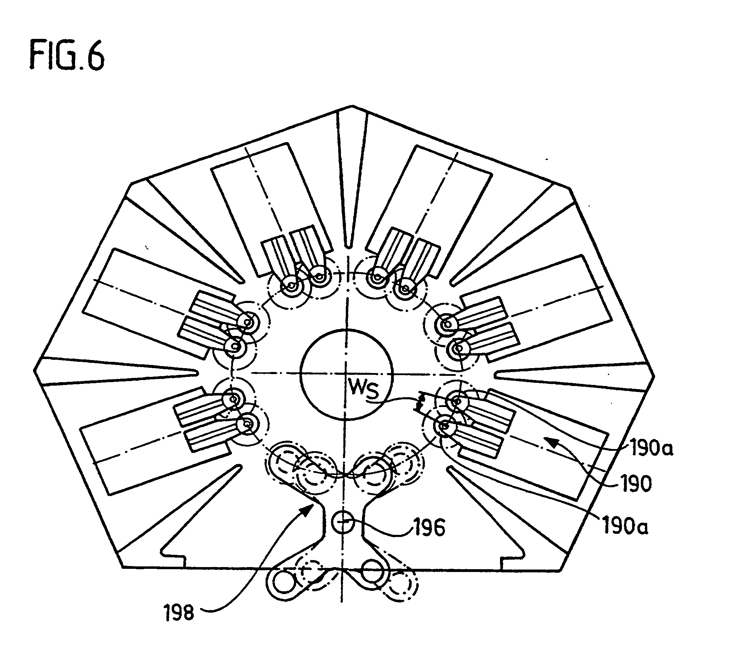

Bei einer Variante der erfindungsgemäßen Werkzeugmaschine, dargestellt in Fig. 6, sind jeder einzelnen Spindelstation 190a bis 190h zwei in geringem Winkelabstand WS voneinander angeordnete Substationen 190a₁ und 190a₂ bis 190h₁ und 190h₂ zugeordnet, wobei in den entsprechenden Bearbeitungsstationen 190a bis 190f dadurch die unterschiedlichsten Möglichkeiten der Bearbeitung gegeben sind, wie dies beispielsweise in der deutschen Patentanmeldung 196 07 883.0-14 beschrieben ist.

Um nun sowohl in der Entladestation 190g als auch in der Beladestation 190h Zugriff zu den Substationen 190g₁ und 190g₂ bzw. 190h₁ und 190h₂ zu schaffen, ist eine um eine zur Achse 20 parallele Schwenkachse 196 schwenkbare Schwenkeinrichtung 198 vorgesehen, welche in einer Schwenkstellung in der Lage ist, die Substationen 190g₁ und 190h₁ zu bedienen und in der anderen Schwenkstellung die Substationen 190g₂ und 190h₂.

Ferner ist noch, um einen Späneflug zwischen den einzelnen Bearbeitungsstationen 190a bis 190f und auch zu der Entladestation 190g und der Beladestation 190h zu verhindern noch eine zusätzliche Unterteilung des Arbeitsraums 180 durch Späneschutzwände 200 vorgesehen, wobei eine Teilwand 202 der Späneschutzwand 200 fest mit dem Träger 96 verbunden ist und dann, wenn die Werkstückspindeln 140 in den Spindelstationen 190 stehen, in einer der Radialebenen 76₁ und 76₈ liegt, während eine Teilwand 204 der Späneschutzwände 200 jeweils in einer der Radialebenen 76₁ bis 76₇ feststeht, so daß dann, wenn die Werkstückspindeln 140 in ihren Spindelstationen 190 stehen, die einzelnen Bearbeitungsstationen 190a bis 190f durch die Späneschutzwände 200, welche sich jeweils in den Radialebenen 76₁ bis 76₇ erstrecken, voneinander getrennt sind und somit ein wechselseitiger Späneflug verhindert wird.

## Patentansprüche

1. Werkzeugmaschine umfassend ein Maschinengestell mit einem Untergestell (14) und einem auf diesem sitzenden und einen Tragring aufweisenden Maschinenständer (40), einen um eine im wesentlichen vertikale Achse (20) drehbar am Tragring (19) gelagerten Träger, mehrere an dem Träger angeordnete Werkstückaufnahmeeinrichtungen (140) für zu bearbeitende Werkstücke (166), einen um die vertikale Achse herum verlaufenden Arbeitsraum (180), in welchem die Werkstückaufnahmeeinrichtungen (140) durch Drehen des Träger (96)um die vertikale Achse herum bewegbar sind, und eine Vielzahl von an dem Maschinengestell im Bereich des Arbeitsraums angeordneten Stationen (190), in welchen die Werkstückaufnahmeeinrichtungen während eines Bearbeitungszyklus positionierbar sind,
**dadurch gekennzeichnet, daß** der Maschinenständer (40) einen den Tragring (90) gegenüber dem Untergestell (14) fixierenden Versteifungsmantel (42) aufweist, welcher außerhalb des Arbeitsraums (180) verläuft und diesen zumindest teilweise umschließt, daß der Versteifungsmantel in einer um die vertikale Achse (20) herum verlaufende Mantelfläche (44) liegende und in dieser Mantelfläche (44) wirkende und vom Tragring (90) übertragene Kräfte (K_{V}, K_{q}, K_{A}) verformungssteif aufnehmende Manteltragwerkselemente (50) umfaßt, die miteinander zu einem verformungssteifen Mantelflächentragwerk (52) verbunden sind.

2. Werkzeugmaschine nach Anspruch 1, **dadurch gekennzeichnet, daß** der Versteifungsmantel (42) mehrere Durchbrüche (58) aufweist, über welche der Arbeitsraum (180) zugänglich ist.

3. Werkzeugmaschine nach Anspruch 2, **dadurch gekennzeichnet, daß** der Arbeitsraum (180) ausschließlich über die Durchbrüche (58) im Versteifungsmantel (42) zugänglich ist.

4. Werkzeugmaschine nach Anspruch 2 oder 3, **dadurch gekennzeichnet, daß** jeder Station (190) ein Durchbruch (58) im Versteifungsmantel (42) zugeordnet ist.

5. Werkzeugmaschine nach Anspruch 3 oder 4, **dadurch gekennzeichnet, daß** die Stationen (190) Bearbeitungsstationen (190a bis f) umfassen und daß in jeder Bearbeitungsstation (190a bis f) der in dieser vorgesehene Werkzeugträger (26) über einen der Durchbrüche (58a bis f) von Außen zugänglich ist.

6. Werkzeugmaschine nach Anspruch 5, **dadurch gekennzeichnet, daß** jeder Bearbeitungsstation (190a bis f) ein eigener Durchbruch (58a bis f) zugeordnet ist.

7. Werkzeugmaschine nach einem der Ansprüche 3 bis 6, **dadurch gekennzeichnet, daß** die Stationen (190) eine Beund/oder Entladestation (190g,h) umfassen und daß in der Be- und/oder Entladestation (190g, h) eine Werkstücktransporteinrichtung (192, 194, 198) durch den Durchbruch (58g) hindurch verläuft.

8. Werkzeugmaschine nach einem der Ansprüche 1 bis 7, **dadurch gekennzeichnet, daß** jedes der Manteltragwerkselemente (50) sich zumindest teilweise um einen der Durchbrüche (58) herum erstreckt.

9. Werkzeugmaschine nach einem der Ansprüche 1 bis 8, **dadurch gekennzeichnet, daß** jedes Manteltragwerkselement (50) sich flächenhaft parallel zu der Mantelfläche erstreckende zusammenhängende Flachstreben (54, 60, 62, 64) umfaßt.

10. Werkzeugmaschine nach Anspruch 9, **dadurch gekennzeichnet, daß** die Flachstreben (54, 60, 62, 64) innerhalb ihrer Außenkontur geschlossene Flächen aufweisen.

11. Werkzeugmaschine nach Anspruch 9 oder 10, **dadurch gekennzeichnet, daß** die Flachstreben (54, 60, 62, 64) jedes Manteltragwerkselements (50) ein zusammenhängendes einstückiges Teil bilden.

12. Werkzeugmaschine nach einem der Ansprüche 9 bis 11, **dadurch gekennzeichnet, daß** die Flachstreben (54, 60, 62, 64) jedes Manteltragwerkselements (50) einen den Durchbruch (58) umgebenden Rahmen bilden.

13. Werkzeugmaschine nach einem der Ansprüche 1 bis 12, **dadurch gekennzeichnet, daß** zumindest ein Abschnitt (46) der Mantelfläche (44) zumindest über einen Teilumfang des Versteifungsmantels (42) ähnlich einem Bereich einer parallel zur vertikalen Achse prismatischen Fläche ausgebildet ist.

14. Werkzeugmaschine nach einem der Ansprüche 1 bis 13, **dadurch gekennzeichnet, daß** zumindest ein Abschnitt (48) der Mantelfläche (44) zumindest über einen Teilumfang des Versteifungsmantels (42) ähnlich einem Bereich einer Kegelfläche mit einer parallel zur vertikalen Achse (20) verlaufenden Kegelachse ausgebildet ist.

15. Werkzeugmaschine nach Anspruch 13 oder 14, **dadurch gekennzeichnet, daß** die Mantelfläche (44) eine vieleckige Grundfläche (70₁ bis 70₈) aufweist, die sich in von der Grundfläche weg verlaufenden Kanten (78) in die Mantelfläche (44) fortsetzt.

16. Werkzeugmaschine nach Anspruch 15, **dadurch gekennzeichnet, daß** ein Teil der Grundfläche (70₁ bis 70₈) der Mantelfläche (44) die Form eines regelmäßigen Vielecks (70₁ bis 70₆) aufweist.

17. Werkzeugmaschine nach Anspruch 15 oder 16, **dadurch gekennzeichnet, daß** sich jeweils ein Manteltragwerkselement (50) zwischen zwei in Umfangsrichtung aufeinanderfolgenden Ecken (74₁ bis 74₇) der vieleckigen Grundfläche erstreckt.

18. Werkzeugmaschine nach einem der voranstehenden Ansprüche, **dadurch gekennzeichnet, daß** der Tragring (90) gegenüber dem Untergestell (14) durch Quertragwerkselemente (100) fixiert gehalten ist, welche sich in ungefähr parallel zur vertikalen Achse (20) und quer zur Mantelfläche (44) verlaufenden Querebenen (76₁ bis 76₇) erstrecken und in diesen Querebenen (76₁ bis 76₇) wirkende und vom Tragring (90) übertragene Kräfte (Kᵥ) verformungssteif aufnehmen.

19. Werkzeugmaschine nach Anspruch 18, **dadurch gekennzeichnet, daß** die Querebenen (76₁ bis 76₇) parallel zu radialen Richtungen zur vertikalen Achse (20) verlaufen.

20. Werkzeugmaschine nach Anspruch 18 oder 19, **dadurch gekennzeichnet, daß** die Quertragwerkselemente (100) sich flächenhaft parallel zu den Querebenen (76₁ bis 76₇) erstrecken.

21. Werkzeugmaschine nach Anspruch 20, **dadurch gekennzeichnet, daß** die Quertragwerkselemente als geschlossene Wandelemente (100) ausgebildet sind.

22. Werkzeugmaschine nach einem der Ansprüche 18 bis 21, **dadurch gekennzeichnet, daß** die Quertragwerkselemente (100) einstückig mit dem Mantelflächentragwerk (52) verbunden sind.

23. Werkzeugmaschine nach einem der Ansprüche 18 bis 22, **dadurch gekennzeichnet, daß** die Quertragwerkselemente (100) in Azimutalrichtung zur vertikalen Achse (20) jeweils zwischen zwei Stationen (190) angeordnet sind.

24. Werkzeugmaschine nach Anspruch 23, **dadurch gekennzeichnet, daß** die Quertragwerkselemente (100) zwischen allen Bearbeitungsstationen (190a bis f) angeordnet sind.

25. Werkzeugmaschine nach einem der Ansprüche 18 bis 24, **dadurch gekennzeichnet, daß** die Quertragwerkselemente (100) innerhalb des Mantelflächentragwerks (52) angeordnet sind.

26. Werkzeugmaschine nach einem der voranstehenden Ansprüche, **dadurch gekennzeichnet, daß** das Mantelflächentragwerk (52) mit sich zumindest teilweise in azimutaler Richtung erstreckenden Versteifungsstreben (108, 110) versehen ist.

27. Werkzeugmaschine nach Anspruch 26, **dadurch gekennzeichnet, daß** die Versteifungsstreben (108, 110) in einer quer zur vertikalen Achse (20) verlaufenden Ebene (38, 112) liegen.

28. Werkzeugmaschine nach Anspruch 26 oder 27, **dadurch gekennzeichnet, daß** sich die Versteifungsstreben (108, 110) jeweils bis zu den Quertragwerkselementen (100) erstrecken und mit diesen verbunden sind.

29. Werkzeugmaschine nach einem der Ansprüche 26 bis 28, **dadurch gekennzeichnet, daß** die Versteifungsstreben (108, 110) einstückig mit dem Mantelflächentragwerk (52) verbunden sind.

30. Werkzeugmaschine nach einem der voranstehenden Ansprüche, **dadurch gekennzeichnet, daß** der Maschinenständer (40) so dimensioniert ist, daß er hinsichtlich seiner Steifigkeit eine mehrzählige Symmetrie zur vertikalen Achse (20) aufweist.

## Claims

1. Machine tool comprising a machine frame with an underframe (14) and a machine stand (40) seated on this and having a support ring, a carrier mounted on the support ring (19) for rotation about an essentially vertical axis, several workpiece receiving means (140) for workpieces (166) to be machined arranged on the carrier, an operating area (180) extending around the vertical axis, the workpiece receiving means (140) being movable around the vertical axis in said operating area due to rotation of the carrier (96), and a plurality of stations (190) arranged on the machine frame in the region of the operating area, the workpiece receiving means being positionable in said stations during a machining cycle,
**characterized in that** the machine stand (40) has a reinforcement casing (42) fixing the support ring (90) in relation to the underframe (14), said casing extending outside the operating area (180) and surrounding it at least partially, that the reinforcement casing comprises casing supporting structure elements (50) located in a casing surface (44) extending around the vertical axis (20), said elements absorbing forces (K_{V}, K_{q}, K_{A}) acting in this casing surface (44) and transferred from the support ring (90) in a manner rigid against deformation and said elements being connected with one another to form a casing surface supporting structure (52) rigid against deformation.

2. Machine tool as defined in claim 1, **characterized in that** the reinforcement casing (42) has several openings (58), the operating area (180) being accessible via said openings.

3. Machine tool as defined in claim 2, **characterized in that** the operating area (180) is accessible exclusively via the openings (58) in the reinforcement casing (42).

4. Machine tool as defined in claim 2 or 3, **characterized in that** an opening (58) in the reinforcement casing (42) is associated with each station (190).

5. Machine tool as defined in claim 3 or 4, **characterized in that** the stations (190) comprise machining stations (190a to f) and that in each machining station (190a to f) the tool carrier (26) provided therein is accessible from the outside via one of the openings (58a to f).

6. Machine tool as defined in claim 5, **characterized in that** each machining station (190a to f) has its own opening (58a to f) associated with it.

7. Machine tool as defined in any one of claims 3 to 6, **characterized in that** the stations (190) comprise a loading and/or unloading station (190g,h) and that in the loading and/or unloading station (190g,h) a workpiece transport unit (192, 194, 198) extends through the opening (58g).

8. Machine tool as defined in any one of claims 1 to 7, **characterized in that** each of the casing supporting structure elements (50) extends at least partially around one of the openings (58).

9. Machine tool as defined in any one of claims 1 to 8, **characterized in that** each casing supporting structure element (50) comprises connected flat struts (54, 60, 62, 64) extending areally parallel to the casing surface.

10. Machine tool as defined in claim 9, **characterized in that** the flat struts (54, 60, 62, 64) have uninterrupted surfaces within their outer contour.

11. Machine tool as defined in claim 9 or 10, **characterized in that** the flat struts (54, 60, 62, 64) of each casing supporting structure element (50) form a connected, integral part.

12. Machine tool as defined in any one of claims 9 to 11, **characterized in that** the flat struts (54, 60, 62, 64) of each casing supporting structure element (50) form a frame surrounding the opening (58).

13. Machine tool as defined in any one of claims 1 to 12, **characterized in that** at least one section (46) of the casing surface (44) is designed, at least over part of the circumference of the reinforcement casing (42), similar to an area of a surface prismatically parallel to the vertical axis.

14. Machine tool as defined in any one of claims 1 to 13, **characterized in that** at least one section (48) of the casing surface (44) is designed, at least over part of the circumference of the reinforcement casing (42), similar to an area of a conical surface with a cone axis extending parallel to the vertical axis (20).

15. Machine tool as defined in claim 13 or 14, **characterized in that** the casing surface (44) has a polygonal base surface (70₁ to 70₈) continuing into the casing surface (44) in edges (78) extending away from the base surface.

16. Machine tool as defined in claim 15, **characterized in that** part of the base surface (70₁ to 70₈) of the casing surface (44) has the shape of a regular polygon (70₁ to 70₆).

17. Machine tool as defined in claim 15 or 16, **characterized in that** one casing supporting structure element (50) extends each time between two corners (74₁ to 74₇) of the polygonal base surface following one another in circumferential direction.

18. Machine tool as defined in any one of the preceding claims, **characterized in that** the support ring (90) is held in a fixed position in relation to the underframe (14) by transverse supporting structure elements (100) extending in transverse planes (76₁ to 76₇) running approximately parallel to the vertical axis (20) and transverse to the casing surface (44), said elements absorbing forces (K_{V}) acting in these transverse planes (76₁ to 76₇) and transferred from the support ring (90) in a manner rigid against deformation.

19. Machine tool as defined in claim 18, **characterized in that** the transverse planes (76₁ to 76₇) extend parallel to radial directions in relation to the vertical axis (20).

20. Machine tool as defined in claim 18 or 19, **characterized in that** the transverse supporting structure elements (100) extend areally parallel to the transverse planes (76₁ to 76₇).

21. Machine tool as defined in claim 20, **characterized in that** the transverse supporting structure elements are designed as closed wall elements (100).

22. Machine tool as defined in any one of claims 18 to 21, **characterized in that** the transverse supporting structure elements (100) are integrally connected to the casing surface supporting structure (52).

23. Machine tool as defined in any one of claims 18 to 22, **characterized in that** the transverse supporting structure elements (100) are each arranged between two stations (190) in azimuthal direction in relation to the vertical axis (20).

24. Machine tool as defined in claim 23, **characterized in that** the transverse supporting structure elements (100) are arranged between all the machining stations (190a to f).

25. Machine tool as defined in any one of claims 18 to 24, **characterized in that** the transverse supporting structure elements (100) are arranged within the casing surface supporting structure (52).

26. Machine tool as defined in any one of the preceding claims, **characterized in that** the casing surface supporting structure (52) is provided with reinforcing struts (108, 110) extending at least partially in azimuthal direction.

27. Machine tool as defined in claim 26, **characterized in that** the reinforcing struts (108, 110) are located in a plane (38, 112) extending transversely to the vertical axis (20).

28. Machine tool as defined in claim 26 or 27, **characterized in that** the reinforcing struts (108, 110) each extend as far as the transverse supporting structure elements (100) and are connected to them.

29. Machine tool as defined in any one of claims 26 to 28, **characterized in that** the reinforcing struts (108, 110) are integrally connected to the casing surface supporting structure (52).

30. Machine tool as defined in any one of the preceding claims, **characterized in that** the machine stand (40) is dimensioned such that it has with respect to its rigidity a multiple symmetry in relation to the vertical axis (20).

## Revendications

1. Machine-outil comprenant un bâti de machine avec un bâti inférieur (14) et un montant de machine (40) logé sur ce bâti inférieur et présentant une bague porteuse, un support logé sur l'anneau porteur (19) de façon pivotante autour d'un axe (10) sensiblement vertical, plusieurs systèmes de logement de pièce (140) disposés sur le support pour des pièces (166) à usiner, un espace de travail (180) agencé autour de l'axe vertical dans lequel les systèmes de logement de pièce (140) peuvent se déplacer par rotation du support (96) autour de l'axe vertical et un grand nombre de stations (190) disposées sur le bâti de machine dans la zone de l'espace de travail, dans lesquelles les systèmes de logement de pièce peuvent être positionnés pendant un cycle d'usinage,
**caractérisée en ce que** le montant de machine (40) présente un manteau de renforcement (42) fixant la bague porteuse (90) en face du bâti inférieur (14), laquelle enveloppe est agencée à l'extérieur de l'espace de travail (180) et entoure celui-ci au moins partiellement, **en ce que** l'enveloppe de renforcement présente des éléments de châssis d'enveloppe (50) disposés dans une surface d'enveloppe (44) agencée autour de l'axe (20) vertical et recevant de façon résistante à la déformation des forces (K_{V}, K_{Q}, K_{R}) agissant dans cette surface d'enveloppe(44)et transmises par la bague porteuse, lesquels éléments sont reliés entre eux pour former un châssis de surface d'enveloppe (52) rigide à la déformation.

2. Machine-outil selon la revendication 1, **caractérisée en ce que** l'enveloppe de renforcement (42) présente plusieurs percements (58), par lesquels l'espace de travail (180) est accessible.

3. Machine-outil selon la revendication 2, **caractérisée en ce que** l'espace de travail (180) est accessible exclusivement par les percements (58) dans l'enveloppe de renforcement (42).

4. Machine-outil selon la revendication 2 ou 3, **caractérisée en ce qu'**un percement (58) dans l'enveloppe de renforcement (42) est attribué à chaque station (190).

5. Machine-outil selon la revendication 3 ou 4, **caractérisée en ce que** les stations (190) comprennent des stations d'usinage (190a à f) et **en ce que**, dans chaque station d'usinage (190a à f), le support d'outil (26) prévu dans cette station est accessible au moyen de l'un des percements (58a jusqu'à f) par l'extérieur.

6. Machine-outil selon la revendication 5, **caractérisée en ce qu'**un percement (58a à f) propre est attribué à chaque station d'usinage (190a à f).

7. Machine-outil selon l'une quelconque des revendications 3 à 6, **caractérisée en ce que** les stations (190) comprennent une station de chargement et/ou de déchargement (190g, h) et **en ce que**, dans la station de chargement et/ou de déchargement (190g, h), un système de transport de pièce (192, 194, 198) passe à travers le percement (58g).

8. Machine-outil selon l'une quelconque des revendications 1 à 7, **caractérisée en ce que** chacun des éléments de châssis d'enveloppe (50) s'étend au moins partiellement autour de l'un des percements (58).

9. Machine-outil selon l'une quelconque des revendications 1 à 8, **caractérisée en ce que** chaque élément de châssis d'enveloppe (50) comprend des montants plats (54, 60, 62, 64) contigus s'étendant de façon plane parallèlement à la surface d'enveloppe.

10. Machine-outil selon la revendication 9, **caractérisée en ce que** les montants plats (54, 60, 62, 64) présentent des surfaces fermées à l'intérieur de leur contour extérieur.

11. Machine-outil selon la revendication 9 ou 10, **caractérisée en ce que** les montants plats (54, 60, 62, 64) de chaque élément de châssis d'enveloppe (50) forment une partie cohérente d'une seule pièce.

12. Machine-outil selon l'une quelconque des revendications 9 à 11, **caractérisée en ce que** les montants plats (54, 60, 62, 64) de chaque élément de support d'enveloppe (50) forment un cadre entourant le percement (58).

13. Machine-outil selon l'une quelconque des revendications 1 à 12, **caractérisée en ce qu'**au moins une partie (46) de la surface d'enveloppe (44) est conçue au moins sur un pourtour partiel de l'enveloppe de renforcement (42) de la même façon qu'une zone d'une surface prismatique parallèle à l'axe vertical.

14. Machine-outil selon l'une quelconque des revendications 1 à 13, **caractérisée en ce qu'**au moins une partie (48) de la surface d'enveloppe (44) est conçue au moins sur un pourtour partiel de l'enveloppe de renforcement (42) de la même façon qu'une zone d'une surface conique avec un axe de cône agencé parallèlement à l'axe (20) vertical.

15. Machine-outil selon la revendication 13 ou 14, **caractérisée en ce que** la surface d'enveloppe (44) présente une surface de base (70₁ à 70₈) polygonale, qui se poursuit dans des arêtes (78) agencées à partir de la surface de base dans la surface d'enveloppe (44).

16. Machine-outil selon la revendication 15, **caractérisée en ce qu'**une partie de la surface de base (70₁ à 70₈) de la surface d'enveloppe (44) présente la forme d'un polygone (70₁ à 70₆) régulier.

17. Machine-outil selon la revendication 15 ou 16, **caractérisée en ce qu'**un élément de châssis d'enveloppe (50) s'étend respectivement entre deux angles (74₁ à 74₇) se succédant dans le sens périphérique de la surface de base polygonale.

18. Machine-outil selon l'une quelconque des revendications précédentes, **caractérisée en ce que** la bague porteuse (90) est maintenue fixée en face du bâti inférieur (14) par des éléments de châssis transversal (100), qui s'étendent dans des plans transversaux (76₁ à 76₇) agencés à peu près parallèlement à l'axe (20) vertical et transversalement à la surface d'enveloppe (44) et reçoivent d'une façon résistante à la déformation des forces (K_{V}) agissant dans ces plans transversaux (76₁ à 76₇) et transmises par la bague porteuse (90).

19. Machine-outil selon la revendication 18, **caractérisée en ce que** les plans transversaux (76₁ à 76₇) sont agencés parallèlement aux directions radiales par rapport à l'axe (20) vertical.

20. Machine-outil selon la revendication 18 ou 19, **caractérisée en ce que** les éléments de châssis transversal (100) s'étendent en surface parallèlement aux plans transversaux (76₁ à 76₇).

21. Machine-outil selon la revendication 20, **caractérisée en ce que** les éléments de châssis transversal sont conçus comme des éléments de paroi (100) fermés.

22. Machine-outil selon l'une quelconque des revendications 18 à 21, **caractérisée en ce que** les éléments de châssis transversal (100) sont reliés d'une seule pièce avec le châssis de surface d'enveloppe (52).

23. Machine-outil selon l'une quelconque des revendications 18 à 22, **caractérisée en ce que** les éléments de châssis transversal (100) sont disposés dans le sens azimutal par rapport à l'axe (20) vertical respectivement entre deux stations (190).

24. Machine-outil selon la revendication 23, **caractérisée en ce que** les éléments de châssis transversal (100) sont disposés entre toutes les stations d'usinage (190a à f).

25. Machine-outil selon l'une quelconque des revendications 18 à 24, **caractérisée en ce que** les éléments de châssis transversal (100) sont disposés à l'intérieur du châssis de surface d'enveloppe (52).

26. Machine-outil selon l'une quelconque des revendications précédentes, **caractérisée en ce que** le châssis de surface d'enveloppe (52) est pourvu de montants de renforcement (108, 110) s'étendant au moins partiellement dans le sens azimutal.

27. Machine-outil selon la revendication 26, **caractérisée en ce que** les montants de renforcement (108, 110) sont disposés dans un plan (38, 112) placé transversalement à l'axe (20) vertical.

28. Machine-outil selon la revendication 26 ou 27, **caractérisée en ce que** les montants de renforcement (108, 110) s'étendent respectivement jusqu'aux éléments de châssis transversal (100) et sont reliés à ceux-ci.

29. Machine-outil selon l'une quelconque des revendications 26 à 28, **caractérisée en ce que** les montants de renforcement (108, 110) sont reliés d'une seule pièce avec le châssis de surface d'enveloppe (52).

30. Machine-outil selon l'une quelconque des revendications précédentes, **caractérisée en ce que** le montant de machine (40) est dimensionné de telle sorte qu'il présente une symétrie à plusieurs chiffres par rapport à l'axe (20) vertical en ce qui concerne sa rigidité.
